# EUROPEAN PATENT SPECIFICATION

(11) **EP 0 543 670 B1**
(45) Date of publication and mention of the grant of the patent: **10.01.1996**
(21) Application number: 92310643.9
(22) Date of filing: 20.11.1992
(51) Int. Cl.: H02K 5/22

(54) **A miniature electric motor**
Elektrischer Kleinmotor
Moteur électrique miniature

(30) Priority: 21.11.1991 JP 95300/91
(43) Date of publication of application: 26.05.1993
(73) Proprietor: MABUCHI MOTOR KABUSHIKI KAISHA, Matsudo-shi, Chiba-ken (JP)
(72) Inventor: Lee, Takanobu, Mabuchi Motor Kabushiki Kaisha, Matsudo-shi, Chiba-ken (JP); Take, Masao, Mabuchi Motor Kabushiki Kaisha, Matsudo-shi, Chiba-ken (JP); Matsushita, Ikuo, Mabuchi Motor Kabushiki Kaisha, Matsudo-shi, Chiba-ken (JP); Mifune, Masahiro, Mabuchi Motor Kabushiki Kaisha, Matsudo-shi, Chiba-ken (JP)
(74) Representative: Hitchcock, Esmond Antony

(56) References cited:
- EP-A- 0 307 704
- US-A- 5 004 941
- PATENT ABSTRACTS OF JAPAN vol. 10, no. 209 (E-421)(2265) 22 July 1986 ; & JP-A-61 049 406

## Description

This invention relates generally to miniature motors, such as stepping motors used for example in business equipment. Typical uses are in printers and facsimile transmission apparatus. However, the invention in not limited to stepping motors, and may to applied to miniature motors used for other purposes. It relates particularly to the construction of coil bobbins as component elements of the stator assembly in such motors.

Stepping motors are widely used as drive sources in information processing machines and other equipment. Typical such motors have stators comprising axially contiguous bobbins upon each of which a coil is wound. Such a motor is disclosed in US-A-5,004,941. The coil wires in stepping motors of this type are normally connected to terminals disposed adjacent juxtaposed flanges of the bobbins which extend through the motor housing for connection to a source of power. The path of the coil wires to the terminals can be untidy, and interfere with the motor housing.

The present invention seeks to facilitate the winding of stator coils on bobbins in motors of the type described above, and the safe location of coil wire ends; to reduce the risk of the wires interfering with the motor housing and of consequential shortcircuiting; and to enable the location of the terminals to be selected more freely.

A motor suitable for use with the present invention has a stator with two axially disposed coils wound on coil bobbins. Each bobbin has an outwardly flange at either axial end of a cylindrical core. According to the invention a projection is provided on a radially extended portion of one flange of each bobbin, which projection extends axially and away from the other flange of the respective bobbin, and the bobbins are disposed such that the flanges with extended portions are adjacent, and the projection of each extended portion is directed past the other extended portion through a cutaway section, with the projection on each bobbin extending over the coil core of the other bobbin and providing for engagement of the winding start and winding end of the coil thereon. With projections disposed in this manner, the winding, attachment, and connection of the coil wires to the terminals is eased.

A motor of the prior art, and two embodiments of the invention will now be described by way of example and with reference to the accompanying schematic drawings wherein:
Figure 1 is a longitudinal sectional view of a known stepping motor;
Figure 2 is a sectional view taken on line A-A in Figure 1;
Figures 3 and 4 are lateral and longitudinal sectional views showing a coil bobbin construction according to one embodiment of this invention;
Figure 5 is an exploded perspective view of the component members of the construction shown in Figures 3 and 4; and
Figures 6 and 7 are lateral and longitudinal sectional views showing a coil bobbin construction according to another embodiment of this invention.

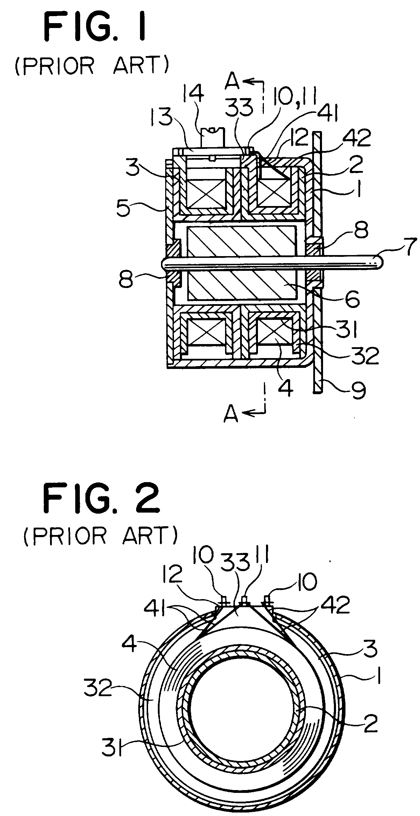

In a conventional type of motor as shown in Figure 1, a housing 1 made of a metallic material, such as mild steel, is formed into a bottomed hollow cylindrical shape. An annular yoke 2 made of a ferromagnetic material is disposed on the inner circumferential surface thereof, with a coil bobbin 3 made of an insulating material, and a coil 4 would on the coil bobbin 3. The housing 1 is closed at its open end by an end plate 5.

A rotor 6 made of a permanent-magnet material, such as ferrite, and formed into a circular column is mounted on a shaft 7 rotatably supported by bearings 8 provided on the housing 1 and the end plate 5. A plurality of axially extending magnetic poles (not shown) are spaced circumferentially on the outer periphery of the rotor 6. The motor is supported on a mounting plate 9.

The coil bobbin 3 comprises a cylindrical core 31 with integrally formed flanges at the axial ends thereof. One flange 32 has a section 33 on which terminals 10 and a common terminal 11 are mounted. The coil 4 is wound on the bobbin 3 by first connecting a wire winding start 41 to one of the terminals 10 and connecting a wire winding end 42 to the common terminal 11. Another wire winding start 41 of the coil 4 constituting another phase is connected to the common terminal 11, and the wire winding end 42 to the other terminal 10. The section 33 protrudes outward of the housing 1 through a notch 12 in the housing wall. A printed circuit board 13 and a connector 14 are electrically connected to the terminals 10 and the common terminal 11. Power is fed to the coil 4 via the connector 14 and the printed circuit board 13. The yoke 2 is excited by a combination of two phases of current flowing in the coil 4, and the rotor 6 is thereby caused to rotate in angular steps.

In a stepping motor of the type described above, the following problems are encountered in forming the coil 4.

To wind the coil 4 on the coil bobbin 3, the wire winding start 41 is invariably located in the vicinity of the flange 32 on the side where the terminals 10 and the common terminal 11 are disposed, while the wire winding end 42 is not necessarily located on the side of the wire winding start 41 and may sometimes be located on the side of the other flange. As a result, the wire winding end 42 is connected to the terminal 10 or the common terminal 11 by running over the coil 4 in a suspended state, as shown in Figure 1. This can cause the wire winding end 42 to interfere with the notch 12 in the housing 1, with the risk of shortcircuit.

This problem can be met by enlarging the notch 12 in the housing wall, but this is not desirable since it creates a larger opening, increasing the possibility of foreign matter entering the housing 1, and also reduces the strength and/or dimensional accuracy of the housing 1. An alternative is to provide a projection for hooking the wire ends of the coil 4 inside the flange 32 on the side of the coil bobbin 3 on which the terminals 10 and the common terminal 11 are disposed. With this arrangement, however, if a projection is provided which has sufficient length to hook both the wire winding start and end, the winding of the coil 4 on the coil bobbin 3 becomes extremely complex. This can also lead to failure of the coil winding in extreme cases.

It has been proposed to bond the wire winding start 41 and end 42 to a portion on the coil 4 immediately below the terminals 10 and the common terminal 11 using adhesive has been attempted. This creates problems of excess adhesive, and make bonding operations extremely troublesome because of a limited bonding area on a small-sized coil 4 in a miniature motor.

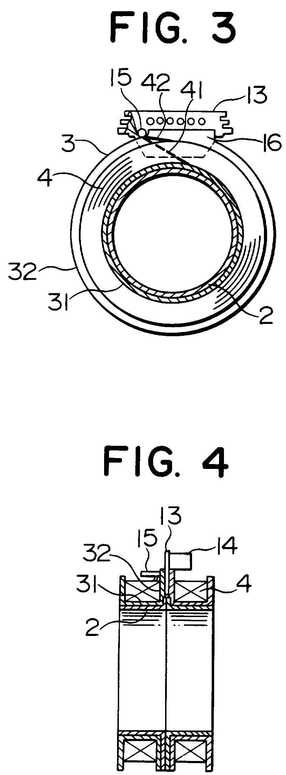

As shown in Figures 3 and 4 a first embodiment of the invention includes projections 15 provided on laterally extended portions 16 of flanges 32 of the coil bobbins 3. The projections 15 thus extend axially of the coil assembly as a whole. The two coil bobbins 3 are disposed in such a manner that when the projections 15 are arranged so as to be directed toward each other, the projection 15 of one coil bobbin 3 faces the coil core 31 of the other coil bobbin 3.

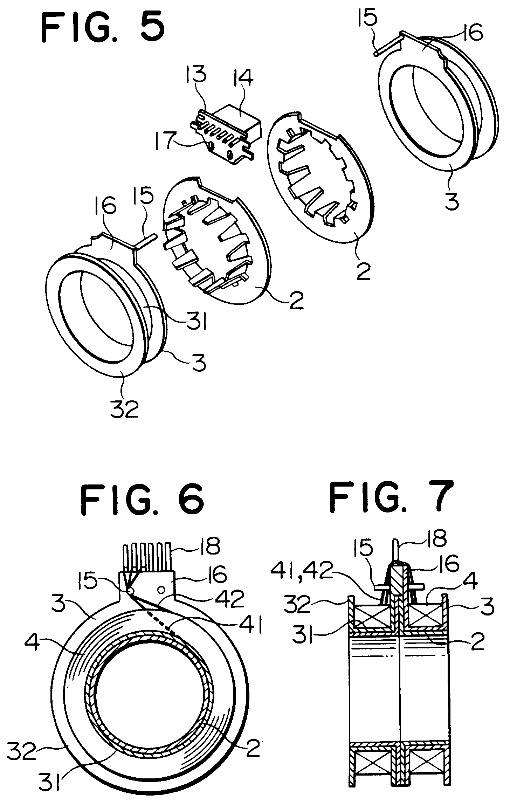

When assembling the coil bobbins 3 in the embodiment of Figures 3 and 4, two coil bobbins 3 on which the coils 4 are wound are prepared. The yokes 2 are assembled with the printed circuit board 13 on which the connector 14 is mounted interposed between the yokes 2. The coil bobbins 3 are then assembled with the projections 15 directed toward each other, and the yokes 2 interposed between the coil bobbins 3, as shown in Figure 5.

When the coil bobbins 3 are assembled, the projection 15 provided on the extended portions 16 on one of the coil bobbin 3 is passed into a through hole 17 provided on the printed circuit board 13 so that the projection 15 is disposed facing the coil core 31, and the coil 4, of the other bobbin 3. Thus, the wire winding start 41 and end 42 can be hooked under the projection 15.

In this case, since the projection 15 can be formed in a sufficient axial length to hook the wire winding start and end, wire threading is easily performed and the loosening of the wire after threading can be prevented. In addition, the wire winding end 41 can be prevented from coming in contact with the notch 12 of the housing shown in Figures 1 and 2, because the wire winding end 42 can be drawn in a direction substantially perpendicular to the axial line at a location near the wire winding start 41 located on the other side of the flange 32.

In the embodiment of the invention shown in Figures 6 and 7, terminals 18 are provided on the extended portion 16 of the flange 32 in such a manner as to protrude in a direction perpendicular to the axial line. With this construction, the coil bobbins 3 are assembled by interposing the two yokes 2 between the two coil bobbins 3, as in the embodiment of Figures 3 to 5. However, the printed circuit board 13 and the connector 14 of the earlier embodiment are not provided. The projection 15 provided on one coil bobbin 3 faces the coil 4 wound on the other coil bobbin 3, and hence the wire winding start 41 and end 42 can be easily hooked on the projection 15. The same benefits as outlined above are therefore achieved. The wire winding start 41 and end 42 are connected to the corresponding terminals 18. A printed circuit board and connectors may be coupled to the terminals 18 as in the case of the previous embodiment, or lead wires may be connected directly to the terminals 18.

The projections 15 provided on the coil bobbins have been described and illustrated as having the shape of a round rod. The projection may however be of any other shape, and grooves or other engaging means may be provided to facilitate the hooking of the coil ends as necessary. The projections may be formed integrally with or separately from the coil bobbins, and a choice of projection types may be provided to enable a type or types to be selected for fitment to the bobbins.

## Claims

1. A miniature electric motor comprising a rotor (6) with a plurality of axially extending magnetic poles spaced circumferentially on the outer periphery thereof, and a stator having two axially disposed coils (4) with starts and ends, wound respectively on bobbins (3), each having an outwardly directed flange (32) at either axial end of a cylindrical core, CHARACTERISED IN THAT a projection (15) is provided on a radially extended portion (16) of one flange (32) of each bobbin (3), which projection extends axially and away from the other flange of the respective bobbin, and the bobbins (3) are disposed such that the flanges (32) with extended portions (16) are adjacent, and the projection (15) of each extended portion (16) is directed past the other extended portion (16) through a cutaway section, with the projection on each bobbin (3) extending over the coil core (31) of the other bobbin (3) and providing for engagement of the winding start (41) and winding end (42) of the coil (4) thereon.

2. A miniature motor according to Claim 1 wherein each projection (15) is in the form of a round rod.

3. A miniature motor according to Claim 1 or Claim 2 wherein a coil-end engaging mechanism is provided on each projection (15).

4. A miniature motor according to any preceding Claim wherein coil wires (41,42) extend around the projections (15) to terminals (18) disposed on at least one of the bobbins (3).

## Patentansprüche

1. Elektrischer Kleinmotor enthaltend einen Rotor (6) mit einer Vielzahl axial verlaufender Magnetpole, die über die äußere Umfangsfläche des Rotors voneinander beabstandet sind, und einen Stator mit zwei axial angeordneten Wicklungen (4), die Wicklungsanfänge und Wicklungsenden haben und jeweils auf Spulenkörper (3) gewickelt sind, wobei jeder Spulenkörper an beiden Axialenden eines zylindrischen Kerns jeweils einen nach außen gerichteten Flansch (32) aufweist, **dadurch gekennzeichnet**, daß an einem radial verlaufenden Abschnitt (16) eines Flansches (32) jedes Spulenkörpers (3) ein Vorsprung (15) vorgesehen ist, der sich in Axialrichtung erstreckt und von dem anderen Flansch des betreffenden Spulenkörpers wegführt, und die Spulenkörper (3) derart angeordnet sind, daß die Flansche (32) mit den radial verlaufenden Abschnitten (16) einander benachbart sind, und der Vorsprung (15) jedes radial verlaufenden Abschnitts (16) durch einen Ausschnitt in Richtung auf den anderen radial verlaufenden Abschnitt (16) verläuft, wobei sich der an jedem Spulenkörper (3) vorgesehene Vorsprung über den Spulenkern (31) des anderen Spulenkörpers (3) erstreckt und für den Wicklungsanfang (41) und das Wicklungsende (42) der darauf befindlichen Wicklung einen Angriff vorsieht.

2. Kleinmotor nach Anspruch 1, bei dem jeder Vorsprung (15) in Form eines Rundstiftes ausgebildet ist.

3. Kleinmotor nach Anspruch 1 oder 2, bei dem ein Wicklungsende-Angriffsmechanismus an jedem Vorsprung (15) vorgesehen ist.

4. Kleinmotor nach irgendeinem vorangegangenen Anspruch, bei dem sich Wicklungsdrähte (41, 42) rund um die Vorsprünge (15) zu Anschlüssen (18) erstrecken, die auf wenigstens einem der Spulenkörper (3) angeordnet sind.

## Revendications

1. Moteur électrique miniature comprenant un rotor (6) comportant plusieurs pôles magnétiques s'étendant axialement et espacés circonférentiellement sur sa périphérie extérieure, et un stator comprenant deux bobinages (4) disposés axialement, avec des tronçons de début et de fin, enroulés respectivement sur des bobines (3), chacune comprenant une joue (32) s'étendant vers l'extérieur à chaque extrémité axiale d'un noyau cylindrique, caractérisé en ce qu'une saillie (15) est prévue sur une portion (16) prolongée radialement d'une joue (32) de chaque bobine (3), laquelle saillie s'étend axialement à distance de l'autre joue de la bobine respective, et les bobines (3) sont disposées de manière que les joues (32) avec les portions prolongées (16) soient adjacentes, et la saillie (15) de chaque portion prolongée (16) est dirigée au-delà de l'autre portion prolongée (16) à travers une section découpée, la saillie de chaque bobine (3) s'étendant sur le noyau (31) de l'autre bobine (3) et permettant l'engagement sur lui du tronçon de début de bobinage (41) et du tronçon de fin de bobinage (42) du bobinage (4).

2. Moteur miniature selon la revendication 1, dans lequel chaque saillie (15) est sous la forme d'une tige ronde.

3. Moteur miniature selon la revendication 1 ou 2, dans lequel un mécanisme d'engagement de tronçon d'extrémité de bobinage est prévu sur chaque saillie (15).

4. Moteur miniature selon l'une quelconque des revendications précédentes, dans lequel les fils de bobinage (41, 42) s'étendent autour des saillies (15) jusqu'à des bornes (18) disposées sur l'une au moins des bobines (3).
